## Europäisches Patentamt

## European Patent Office

## Office européen des brevets

(11) Veröffentlichungsnummer: **0 352 452**
**A2**

(12) **EUROPÄISCHE PATENTANMELDUNG**

(21) Anmeldenummer: **89110392.1**

(22) Anmeldetag: **08.06.89**

(51) Int. Cl.4: **B60S 3/04**

(30) Priorität: **30.06.88 DE 3822133**

(43) Veröffentlichungstag der Anmeldung:
**31.01.90 Patentblatt 90/05**

(84) Benannte Vertragsstaaten:
**AT BE CH DE ES FR GB LI LU NL**

(71) Anmelder: **IMOSTAB GRUNDBESITZ UND
BAUTRÄGER GMBH
Graf-Adolf-Strasse 13
D-4000 Düsseldorf(DE)**

(72) Erfinder: **Ordinaire, Francois
Graf-Adolf-Platz 13
D-4000 Düsseldorf 1(DE)**

(74) Vertreter: **Patentanwälte Deufel- Schön-
Hertel- Lewald- Otto
Isartorplatz 6
D-8000 München 2(DE)**

(54) **Automatische Waschanlage.**

(57) Bei der automatischen Waschanlage für Kraftfahrzeuge mit einem Warte- oder Staubereich für zu waschende Kraftfahrzeuge und einer Fördereinrichtung zum Fördern der Kraftfahrzeuge durch einen Reinigungsbereich und durch einen nachfolgenden Trocknungsbereich ist die Geschwindigkeit der Fördereinrichtung automatisch an die Belegung des Wartebereichs und/oder der Fördereinrichtung anpaßbar.

EP 0 352 452 A2

## Automatische Waschanlage

Die Erfindung betrifft eine automatische Waschanlage oder Waschstraße für Kraftfahrzeuge mit einem Wartebereich für zu waschende Kraftfahrzeuge und einer Fördereinrichtung zum Fördern der Kraftfahrzeuge durch einen Reinigungsbereich und durch einen nachfolgenden Trocknungsbereich.

Es ist bekannt, bei derartigen Waschanlagen den elektromotorischen Antrieb der Fördereinrichtung in mehreren Stufen oder stufenlos manuell umzuschalten. Die manuell vorgenommene Einstellung der Fördergeschwindigkeit bestimmt die Kapazität einer derartigen Waschanlage oder Waschstraße. Eine optimale Anpassung der Fördergeschwindigkeit abhängig von der Anzahl der zu reinigenden Kraftfahrzeuge ist dabei in der Regel nicht möglich. Beispielsweise kann vergessen werden, die Fördergeschwindigkeit herunterzuschalten, wenn nur wenige Fahrzeuge die Waschanlage anfahren, so daß auch bei geringem Angebot an zu reinigenden Fahrzeugen diese mit der hohen Fördergeschwindigkeit bearbeitet werden.

Der Erfindung liegt die Aufgabe zugrunde, eine automatische Waschanlage zu schaffen, bei der ständig eine optimale Reinigung bei wechselnder Belegung gewährleistet ist.

Diese Aufgabe wird erfindungsgemäß dadurch gelöst, daß die Geschwindigkeit der Fördereinrichtung automatisch an die Belegung des Wartebereichs oder der Zufahrt und/oder der Fördereinrichtung anpaßbar ist.

Durch eine automatische Anpassung der Fördergeschwindigkeit an den tatsächlich vorhandenen Bedarf wird immer ein optimaler Kompromiß zwischen Warten und Reinigungsqualität der Kraftfahrzeuge gewährleistet. Die Kriterien für das Rauf- oder Runterschalten der Fördergeschwindigkeit sind entweder die Belegung des Stau- oder Warteraumes vor der Waschstraße, die Belegung der Waschstraße selbst oder beide zusammen. Mit der erfindungsgemäßen automatischen Geschwindigkeitsregelung der Fördereinrichtung wird erreicht, daß einerseits Warteschlangen schnell abgebaut werden, daß aber andererseits bei geringerem Andrang die Fördergeschwindigkeit sofort herabgesetzt wird, was unmittelbar der Wasch- und Trokkenqualität der Kraftfahrzeuge zugute kommt.

Gemäß einer bevorzugten Ausführungsform sind zur Ermittlung der Belegung des Warte- oder Staubereichs Sensoren und eine Zählvorrichtung vorgesehen.

Vorzugsweise ist eine Einrichtung zur Ermittlung der Belegung der Fördereinrichtung vorgesehen.

Bei starker Belegung des Wartebereichs und/oder des Förderbereichs ist die Fördergeschwindigkeit vorzugsweise stufenlos erhöhbar. Wenn der Andrang geringer wird, ist die Fördergeschwindigkeit entsprechend stufenlos reduzierbar.

Vorzugsweise ist in der Zufahrt zur Waschanlage eine in der Fahrbahn installierte Induktionsschleife angeordnet, welche die Anzahl der einfahrenden Fahrzeuge registriert. Durch eine an der Ausfahrt der Waschstraße vorgesehene Erfassungseinrichtung, vorzugsweise eine Lichtschranke, werden die ausfahrenden Fahrzeuge erfaßt. Durch diese beiden Meßstellen kann ständig die aktuelle Anzahl der zu reinigenden Fahrzeuge ermittelt werden.

Die an der Zufahrt zur Waschanlage installierte Induktionsschleife kann unterschiedliche Belegungszeiten registrieren, d.h. einmal die normale Überfahrtzeit eines Fahrzeuges und zum anderen die längere Verweilzeit eines Fahrzeuges bei Rückstau im Warteraum zur Waschanlage.

Über die normalen Betriebsschalter der Waschanlage kann automatisch festgestellt werden, ob die Waschanlage oder Waschstraße im Einzelbetrieb fährt oder ob die Kapazität der Fördereinrichtung voll ausgenutzt wird. Wenn ermittelt wird, daß die Waschanlage für eine vorbestimmte Zeit, beispielsweise 10 Minuten, voll belegt ist, kann dies als Kriterium zum Umschalten in eine höhere Fördergeschwindigkeit gewertet werden, so daß der Durchsatz der Waschanlage erhöht werden kann, wobei eine gute Reinigung gewährleistet bleibt.

## Ansprüche

1. Automatische Waschanlage oder Waschstraße für Kraftfahrzeuge, mit einem Wartebereich für zu waschende Kraftfahrzeuge und einer Fördereinrichtung zum Fördern der Kraftfahrzeuge durch einen Reinigungsbereich und durch einen nachfolgenden Trocknungsbereich, dadurch **gekennzeichnet**, daß die Geschwindigkeit der Fördereinrichtung automatisch an die Belegung der Zufahrt oder des Wartebereichs und/oder der Fördereinrichtung anpaßbar ist.

2. Waschanlage nach Anspruch 1, dadurch **gekennzeichnet**, daß zur Ermittlung der Belegung des Wartebereichs Sensoren und eine Zählvorrichtung vorgesehen sind.

3. Waschanlage nach Anspruch 1 , dadurch **gekennzeichnet,** daß in der Zufahrt zur Waschanlage eine in der Fahrbahn installierte Induktionsschleife zur Ermittlung der Anzahl der einfahrenden Fahrzeuge angeordnet ist.

4. Waschanlage nach Anspruch 3, dadurch **ge-**

kennzeichnet, daß an der Ausfahrt aus der Waschanlage eine Erfassungseinrichtung für die gewaschenen Kfz angeordnet ist.

5. Waschanlage nach Anspruch 4, dadurch gekennzeichnet, daß die Erfassungseinrichtung eine Lichtschranke ist.

6. Waschanlage nach einem der Ansprüche 1 bis 5, dadurch gekennzeichnet, daß eine Einrichtung zur Ermittlung der Belegung der Fördereinrichtung vorgesehen ist.

7. Waschanlage nach einem der Ansprüche 1 bis 6, dadurch gekennzeichnet, daß bei starker Belegung des Wartebereichs und/oder des Förderbereichs die Fördergeschwindigkeit stufenlos erhöhbar und bei schwacher Belegung entsprechend reduzierbar ist.

8. Waschanlage nach einem der Ansprüche 1 bis 7, dadurch gekennzeichnet, daß die Erhöhung der Fördergeschwindigkeit durch die Waschanlage nach einem vorbestimmten Zeitraum der Vollbelegung erfolgt.

9. Waschanlage nach Anspruch 8, dadurch gekennzeichnet, daß der vorbestimmte Zeitraum 10 Minuten beträgt.